# EUROPEAN PATENT APPLICATION

(11) **EP 4 738 340 A1**
(43) Date of publication of application: **06.05.2026**
(21) Application number: 25208803.4
(22) Date of filing: 15.10.2025
(51) Int. Cl.: G10H 1/36, G06F 3/16

(54) **SEGMENTATION OF AUDIO SOURCE FOR VOCAL REMOVAL**

(30) Priority: 29.10.2024 US 202418930843
(71) Applicant: Harman Becker Automotive Systems GmbH, 76307 Karlsbad (DE)
(72) Inventor: WILLIS, Maxwell B., 76307 Karlsbad (DE); WINTON, Riley, 76307 Karlsbad (DE); TRESTAIN, Christopher, Michael, 76307 Karlsbad (DE)
(74) Representative: Westphal, Mussgnug & Partner, Patentanwälte mbB

(57) **Abstract**

Various embodiments disclose a computer-implemented method comprising receiving an audio source for playback, extracting a first segment of the audio source, the first segment comprising a first portion of the audio source, removing a first vocal component from the first segment to create a first modified segment, and causing playback of at least a subsegment of the first modified segment using one or more audio output devices.

## Description

### BACKGROUND

### Field of the Various Embodiments

The various embodiments relate generally to audio processing and, more specifically, to segmentation of an audio source for vocal removal.

### Description of the Related Art

Modern vehicles include in-vehicle infotainment (IVI) systems that receive audio and video inputs from various sources. The IVI system includes various output devices, such as displays and loudspeakers that are positioned throughout the vehicle. An IVI system obtains an input, such as an audio input, selected by a user from a local or remote audio source, and plays back the audio input using an output device in the vehicle.

Karaoke experiences can be provided by an IVI system and involve singing along with a prerecorded audio performance that is played back by an audio output device by the IVI system. A user sings along with the prerecorded audio performance and in some instances, a microphone is utilized to capture the user's voice, which is reproduced using the same audio output device that plays back the prerecorded audio performance. In some cases, users prefer to utilize an audio source from which the primary and/or background vocals have been removed. Some prerecorded audio performances are created specifically for use with karaoke experiences by preprocessing a song to remove vocal components. The preprocessing is generally performed by a person, such as an audio engineer or producer, or by an automated vocal removing algorithm, and the preprocessed song is provided as an audio source to an audio playback system. In other examples, a prerecorded audio performance for use with a karaoke experience is created by recording an instrumental version of a song without primary and/or secondary vocals. In either scenario, creating a version of a song for use in a karaoke experience requires preprocessing or pre-recording the song that it used for the karaoke experience. Another technique for providing a karaoke experience involves playing back a song and allowing the user to sing over the unmodified version of the song. However, a karaoke experience that is provided using audio sources containing vocals results in a poor karaoke experience for many users.

Some karaoke experiences provide mechanisms for real-time suppression of vocal components of a song that is played back during a karaoke experience. One technique for real-time suppression of vocal components is performing mid-band ducking of an audio source, which lowers the volume of the mid-band component of an audio signal, which is where vocal components are often contained. However, with mid-band ducking, other components of the audio other than vocal components are removed, such as instrumental components, degrading the quality of the karaoke experience. Center channel ducking or suppression is a technique that is utilized in the case of 5.1. 7.1, or other multi-channel audio sources having a discrete center channel. However, many audio sources that include music are often two channel audio sources that lack a discrete center channel.

One drawback with utilizing conventional techniques for removing vocal components from audio sources to provide a karaoke experience is that many vocal remover algorithms cannot be utilized in real-time. Vocal remover algorithms often require significant processing time that prevents the algorithms from being used in a real-time manner on audio sources that are streamed for playback. Additionally, utilizing prerecorded karaoke versions of a song does not allow users to have a karaoke experience for all audio sources that are played back by the audio playback system. A drawback of providing a karaoke experience with unmodified audio sources that contain vocals is a poor karaoke user experience. A drawback of performing mid-band ducking or center channel ducking is that components of an audio source other than vocal components are removed by these techniques, which degrades the quality of the karaoke experience.

As the foregoing illustrates, what is needed in the art are more effective techniques for processing audio sources that provide an acceptable karaoke experience for users.

### SUMMARY

**In** various embodiments, a computer-implemented method includes receiving an audio source for playback; extracting a first segment of the audio source, the first segment comprising a first portion of the audio source; removing a first vocal component from the first segment to create a first modified segment; and causing playback of at least a subsegment of the first modified segment using one or more audio output devices.

At least one technical advantage of the disclosed techniques relative to the prior art is that, with the disclosed techniques, an audio source, such as a song that contains vocal components for which a user desires a karaoke experience, the vocal components of the audio source are removed substantially in real-time. By removing the vocal components of the song substantially in real time, a karaoke experience is provided with any number of audio sources that are streamed for playback. Additionally, by utilizing a vocal removing algorithm rather than techniques such as mid-band or center channel ducking to remove the vocal components of the song, the quality of the karaoke version of the audio source is improved because other non-vocal components of the audio source remain intact when the karaoke version of the audio source is played back. Accordingly, playing back the audio source without vocal components along with the vocal inputs captured by one or more microphones provides an improved karaoke experience. These technical advantages provide one or more technological advancements over prior art approaches.

### BRIEF DESCRIPTION OF THE DRAWINGS

So that the manner in which the above recited features of the various embodiments can be understood in detail, a more particular description of the inventive concepts, briefly summarized above, can be had by reference to various embodiments, some of which are illustrated in the appended drawings. It is to be noted, however, that the appended drawings illustrate only typical embodiments of the inventive concepts and are therefore not to be considered limiting of scope in any way, and that there are other equally effective embodiments.
Figure 1 illustrates a block diagram of a computing device configured to implement one or more aspects of the present disclosure.
Figure 2 illustrates a block diagram of an IVI system configured to implement one or more aspects of the present disclosure.
Figure 3 illustrates an example of an audio source that is processed according to one or more aspects of the present disclosure.
Figure 4 illustrates an example of an audio source that is processed according to one or more aspects of the present disclosure.
Figure 5 illustrates another example of an audio source that is processed according to one or more aspects of the present disclosure.
Figure 6 is a flow diagram of method steps for processing an audio source according to one or more aspects of the present disclosure.

### DETAILED DESCRIPTION

In the following description, numerous specific details are set forth to provide a more thorough understanding of the various embodiments. However, it will be apparent to one skilled in the art that the inventive concepts can be practiced without one or more of these specific details. For explanatory purposes, multiple instances of like objects are symbolized with reference numbers identifying the object and parenthetical numbers(s) identifying the instance where needed.

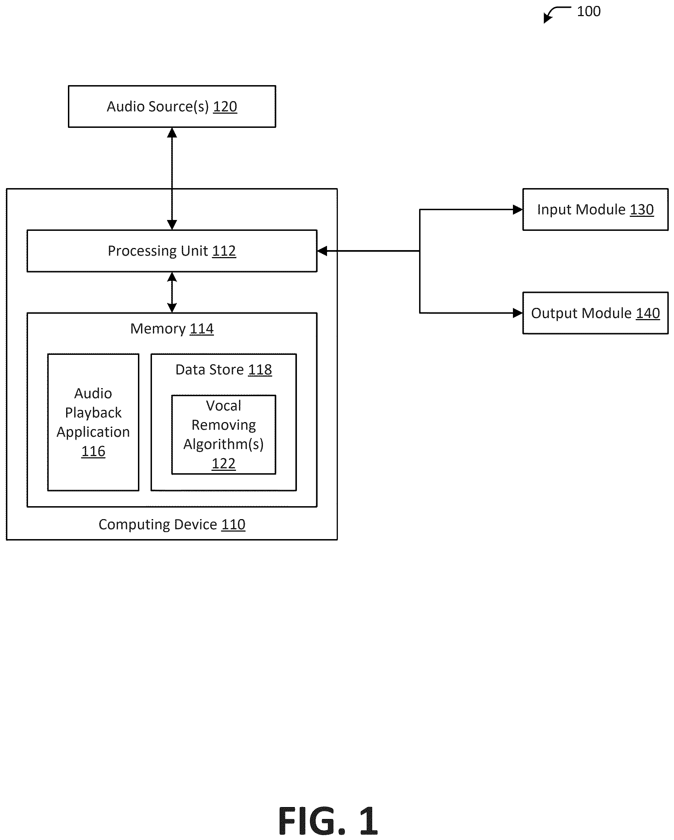

FIG. 1 illustrates a block diagram of an audio playback system configured to implement one or more aspects of the present disclosure. As shown, the audio playback system 100 includes, without limitation, a computing device 110, audio source(s) 120, input module 130, and output module 140. The computing device 110 includes, without limitation, a processing unit 112 and memory 114. The memory 114 includes, without limitation, an audio playback application 116 and a data store 118. The data store 118 includes, without limitation, a vocal removing algorithm 122.

In operation, the computing device 110 executes the audio playback application 116 to control the playback of audio. In one example, audio is played back from one or more vehicle components or sources within or outside of a vehicle. In particular, the processing unit 112 executes audio playback application 116 and causes playback of audio on one or more output devices associated with audio playback system 100. The audio playback application 116 receives an audio source 120, such as a terrestrial or satellite radio signal, music or other content obtained from a streaming audio service, audio files stored on a storage device associated with a vehicle, or audio content streamed from another device, such as a Bluetooth device to which the computing device 110 is connected.

Audio playback application 116 also provides a karaoke experience for users in connection with an audio source 120 that is played by audio playback system 100. For example, audio playback application 116 receives an audio input from input module 130, such as a vocal input detected by a microphone associated with audio playback system 100. Audio playback application 116 plays back the audio input on an audio output device, such as one or more loudspeakers, along with the audio source 120. In some cases, audio playback application 116 plays back video content on displays within the vehicle or toggles interior or exterior lighting in addition to playing back the audio source 120 and audio input to enhance the karaoke experience.

The computing device 110 includes the processing unit 112 and the memory 114. In various embodiments, the computing device 110 is a device that includes one or more processing units 112, such as a system-on-a-chip (SoC). In various embodiments, the computing device 110 is a mobile computing device, such as a tablet computer, mobile phone, media player, and so forth that wirelessly connects to other devices in the vehicle. In some embodiments, the computing device 110 is a head unit included in a vehicle system. Additionally, or alternatively, the computing device 110 can be a detachable device that is mounted in a portion of a vehicle as part of an individual console. Generally, the computing device 110 is configured to coordinate the overall operation of the audio playback system 100. The embodiments disclosed herein contemplate any technically feasible system configured to implement the functionality of the audio playback system 100 via the computing device 110. The functionality and techniques of the audio playback system 100 are also applicable to other types of vehicles, including consumer vehicles, commercial trucks, airplanes, helicopters, spaceships, boats, submarines, and so forth.

The processing unit 112 can include one or more central processing units (CPUs), digital signal processing units (DSPs), microprocessors, application-specific integrated circuits (ASICs), neural processing units (NPUs), graphics processing units (GPUs), field-programmable gate arrays (FPGAs), and so forth. The processing unit 112 generally includes a programmable processor that executes program instructions to manipulate input data and generate outputs. In some embodiments, the processing unit 112 can include any number of processing cores, and other modules for facilitating program execution.

The memory 114 includes a memory module or collection of memory modules. The memory 114 generally comprises storage chips such as random-access memory (RAM) chips that store application programs and data for processing by the processing unit 112. In various embodiments, the memory 114 includes non-volatile memory, such as optical drives, magnetic drives, flash drives, or other storage. The audio playback application 116 within the memory 114 is executed by the processing unit 112 to implement the overall functionality of the computing device 110 and, thus, coordinate the operation of the audio playback system 100 as a whole.

The audio playback application 116 processes audio sources 120 and/or audio inputs received from input module 130 to reproduce audio signals. In various embodiments, the audio playback application 116 plays back audio sources via output module 140 along with vocal inputs from one or more occupants or users of a vehicle. The vocal inputs are obtained via input module 130 to provide a karaoke experience. Additionally, audio playback application 116 processes audio source 120 to remove vocal components from the audio source 120, which provides an improved karaoke experience. Audio playback application 116 removes vocal components from audio source 120 by separating the audio source 120 into one or more segments. The segments are provided to a vocal removing algorithm that removes vocals from the segments to generate modified segments. The modified segments are then played back by audio playback application 116 via output module 140. The modified segments are played back sequentially in the order in which they originally existed in the audio source 120.

Audio playback application 116 buffers the audio source 120 by extracting an initial segment from the audio source 120 and processing the initial segment with a vocal removing algorithm 122. The initial segment provides a buffer that allows audio playback application 116 to process one or more additional or subsequent segments of the audio source 120 with the vocal removing algorithm 122 during playback of the initial segment. In some implementations, a length of the initial segment of the audio source 120 is selected to provide sufficient processing time for the audio playback application 116 to process a subsequent segment of the audio source 120 so that processing of the subsequent segmented is completed before playback of the initial segment has completed. The subsequent segment could be the same size as the initial segment or constitute the entire remainder of the audio source 120.

Audio playback application 116 also utilizes techniques to reduce user perception of any potential gaps between modified segments that are played back by audio playback system 100. In one example, the segments that are extracted from audio source 120 temporally overlap so that an end portion of a first segment temporally overlaps a beginning portion of a second segment. In this scenario, the second segment is subsequent to the first segment from the audio source 120. Audio playback application 116 processes the segments to remove vocal components from the respective segments to produce modified segments. Then, audio playback application 116 causes audio playback system 100 to crossfade playback of the modified segments to produce a smooth transition between the two segments from the audio source 120. In another example, the audio playback application 116 sequentially plays back the first modified segment and then the second modified segment without crossfading. The size of the segments that are extracted from audio source 120 and modified by audio playback application 116 can be variable using different techniques. For example, the first segment can be relatively small compared to subsequent segments so that the audio playback application 116 processes the first segment to remove vocal components and begins playback of the modified first segment to reduce or eliminate user perception of any delay in playback of the audio source 120 by the audio playback system 100. The second segment can be larger than the first segment but only large enough so that the audio playback application 116 can complete processing of the second segment before playback of the modified first segment has been completed. In some instances, if the computing device 110 possesses sufficient processing resources to complete processing of a large second segment before playback of the modified first segment has completed, the second segment can comprise the entire remainder of the audio source 120. Accordingly, audio playback application 116 processes the second segment before playback of the modified first segment has completed so as to eliminate any gaps in playback of the audio source 120 between the modified first segment and modified subsequent segments. In another implementation, the extracted segments are sized equally with the potential exception of a last segment of the audio source 120. In another scenario, the segment size elected for audio segments extracted from audio source 120 is selected based on a minimum or maximum input size supported by a vocal removing algorithm 122 utilized by audio playback application 116 to remove vocal components from the respective segments.

To remove vocal components from audio source 120, audio playback application 116 provides the extracted segments of audio to a vocal removing algorithm 122. Vocal removing algorithm 122 is executed by computing device 110 to remove vocal components from an audio source. Audio playback application 116 can utilize more than one vocal removing algorithm 122 that is selected based upon properties of the audio source 120 and/or user preferences. For example, certain vocal removing algorithms 122 are configured to remove vocal components from certain types of content or musical genres better than others. Therefore, audio playback application 116 analyzes metadata associated with audio source 120 to ascertain a content type or genre of the audio source 120 and selects a vocal removing algorithm 122 based on the content type or genre. In another example, a user selects different karaoke modes or configuration parameters associated with a karaoke mode provided by audio playback application 116. A first mode removes all vocals from the audio source 120 according to a user preference. A second mode removes only primary vocals but the secondary or backup vocals remain in the audio source 120. In an example, audio playback application 116 selects a karaoke mode and a vocal removing algorithm 122 depending upon detected presence of other occupants in a vehicle. For example, if more than one or two occupants are detected in the vehicle, audio playback application 116 can select a vocal removing algorithm 122 that removes all vocals from audio source 120 if all of the occupants of the vehicle would like to participate in the karaoke experience. If only one occupant in the vehicle is detected, audio playback application 116 can select a vocal removing algorithm 122 that removes only primary vocals from audio source 120. Accordingly, audio playback application 116 selects an appropriate vocal removing algorithm 122 based on a selected mode or user preference regarding which vocals should be removed from the audio source 120. In another example, different vocal removing algorithms 122 provide differing performance or output results. Therefore, a user can select a different vocal removing algorithm 122 offered by audio playback application 116 to power a karaoke mode based on the performance characteristics of a selected vocal removing algorithm 122.

The data store 118 is a portion of the memory 114 that stores various data locally, including vocal removing algorithm 122 and other data (not shown), such as content items, data tables (e.g., a table mapping audio tones to events) and/or application data (e.g., secure application data, metadata, etc.) associated with the audio playback application 116. In various embodiments, the data store 118 can be included in volatile memory and can correspond to a section of nonvolatile memory. In some embodiments, the computing device 110 can sync data between the volatile memory and the nonvolatile memory so that copies of data are stored in both the volatile and nonvolatile memory. In some embodiments, the data store 118 stores downloaded audio files obtained from a network source or other remote source. The audio files can be played back via output module 140 by audio playback application 116.

The vocal removing algorithm(s) 122 in the data store 118, as noted above, includes one or more algorithms utilized by audio playback application 116 to remove primary and/or secondary vocals from an audio source 120 that is played back by output module 140. Audio playback application 116 can utilize multiple vocal removing algorithms 122 depending upon user preferences or detected vocal characteristics of an audio source 120. Additionally, certain vocal removing algorithms 122 operate to remove only primary vocals from an input and others operate to remove all vocals from an audio source. Accordingly, audio playback application 116 selects a particular vocal removing algorithm 122 that is utilized to remove vocal components from the audio source 120 based on a selected karaoke mode or a user selection of the vocal removing algorithm 122.

The audio source(s) 120 includes one or more data sources that provide an audio signal for reproduction. The audio source 120 includes a prerecorded audio performance, such as a song. In various embodiments, the audio source 120 is included in a device within the vehicle, such as an entertainment subsystem included in the head unit of the vehicle, a rear-seat entertainment console, a device mounted in the vehicle, and so forth. In some embodiments, the audio source 120 is included in a mobile device, wearable device, and/or other portable device that connects to the audio playback application 116. Additionally, the audio source 120 can be remote to the vehicle. In such instances, the remote data source streams the audio source 120 to the computing device 110, whereupon the audio playback application 116 transmits the audio source 120 to an output device associated with output module 140 for reproduction.

The input module 130 includes one or more devices that perform measurements and/or acquire data related to certain subjects in an environment. In various embodiments, the input module 130 generates sensor data that is related to the user and/or objects in the environment that are not the user. In some embodiments, the input module 130 is coupled to and/or included within the computing device 110 and sends sensor data to the processing unit 112.

In various embodiments, the input module 130 includes audio sensors, such as built-in microphones and/or a microphone array that record sounds within the compartment of the vehicle. The vehicle occupant sensors include, for example, optical sensors, such as RGB cameras, infrared cameras, depth cameras, and/or camera arrays, which include two or more of such cameras that are oriented towards the seating area of the vehicle. Compartment sensors include, for example, pressure sensors integrated into seating locations in the vehicle that detect when an occupant is seated in a particular seating location in the vehicle. In some embodiments, the input module 130 includes touch sensors, position sensors (e.g., an accelerometer and/or an inertial measurement unit (IMU)), or other types of sensors that register the presence, body position and/or movement of a user within the vehicle.

In some embodiments, the input module 130 includes physiology sensors, such as heart-rate monitors, electroencephalography (EEG) systems, radio sensors, thermal sensors, galvanic skin response sensors (e.g., sensors that measure change in electrical resistance of skin caused by emotional stress), contactless sensor systems, or magnetoencephalography (MEG) systems. Input module 130 also includes devices capable of receiving input, such as a keyboard, a mouse, a touch-sensitive screen, and other input devices for providing inputs to the computing device 110. In various embodiments, the input module 130 is associated with a specific console, such as personalized screens mounted to a portion of a seat, or console-specific input components.

Output module 140 includes one or more devices capable of providing output, such as a display screen or loudspeakers. In various embodiments, one or more of input module 130 or output module 140 is incorporated in the computing device 110 or is external to the computing device 110. In some embodiments, the computing device 110, input module 130, or output module 140 can be components of an IVI system or an entertainment subsystem included in a vehicle.

### Vehicle System

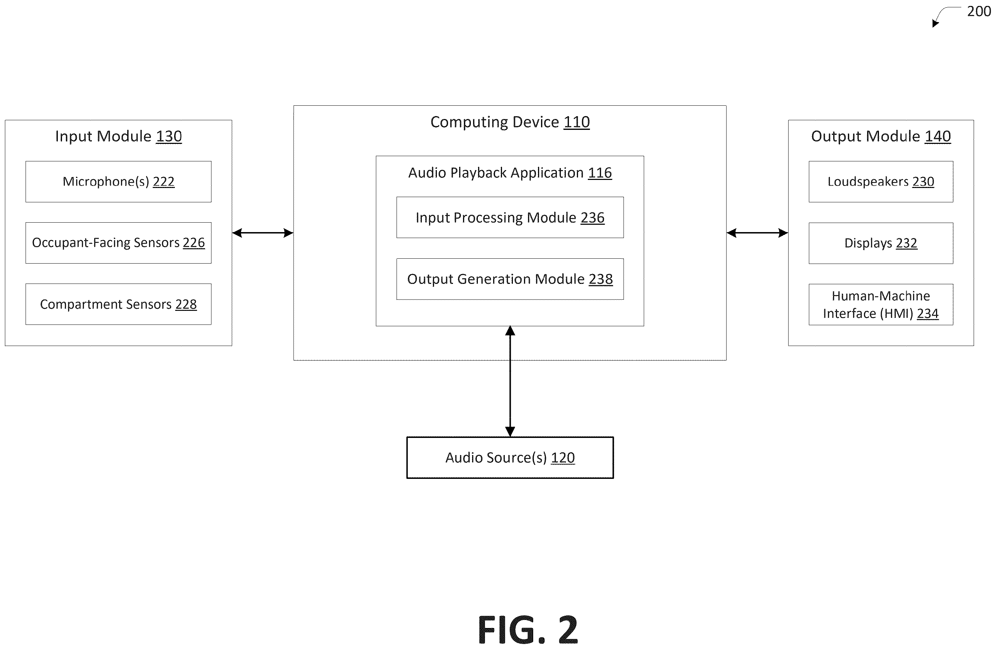

FIG. 2 illustrates an example IVI system 200 that includes the audio playback system 100 of FIG. 1, according to various embodiments. As shown, the IVI system 200 includes, without limitation, an input module 130, computing device 110, and output module 140. The input module 130 includes, without limitation, one or more microphones 222, occupant-facing sensors 226, and compartment sensors 228. The computing device 110 includes, without limitation, the audio playback application 116. The output module 140 includes, without limitation, loudspeakers 230, displays 232, and a human-machine interface (HMI) 234. The audio playback application 116 includes, without limitation, an input processing module 236 and an output generation module 238.

In some embodiments, computing device 110 can be integrated into a head unit of the vehicle. A head unit is a component of the vehicle that is mounted at any location within a passenger compartment of the vehicle in any technically feasible fashion. In some embodiments, the head unit includes any number and type of instrumentation and applications and provides any number of input and output mechanisms. For example, the head unit enables users (e.g., the driver and/or passengers) to control the IVI system. The head unit supports any number of input and output data types and formats, as known in the art. For example, the head unit could include built-in Bluetooth for hands-free calling and/or audio streaming, USB connections, speech recognition, camera inputs via the input module 130, video outputs via the output module 140 for any number and type of displays 232, and any number of audio outputs. In general, any number of sensors, displays, receivers, transmitters, etc., can be integrated into the head unit, or can be implemented externally to the head unit. Additionally, computing device 110 can be located elsewhere in the vehicle, such as hidden behind interior trim panels in a manger that is not visible to passengers.

In operation, audio playback application 116 receives an audio source 120 and causes loudspeakers 230 associated with output module 140 to play back a modified version of the audio source 120 that has been processed by audio playback application 116. The audio source 120 includes a song, radio station, or other audio source that can be played back or streamed by computing device 110. In one scenario, a user of IVI system 200 activates a karaoke mode of the audio playback application 116 via HMI 234 and selects an audio source 120. The modified version of the audio source 120 is a version of the audio source 120 from which primary or all vocal components have been removed by audio playback application 116. To remove vocal components from an audio source 120, audio playback application 116 extracts multiple segments from the audio source 120. The multiple segments are provided as inputs to a vocal removing algorithm 122 that removes primary and/or secondary vocal components from the inputs and returns modified segments. Audio playback application 116 sequentially plays back the modified segments to provide a karaoke experience for occupants of a vehicle in which the IVI system 200 is implemented. In an example, audio playback application 116 plays back a first modified segment via output module 140 while a subsequent audio segment is being processed by vocal removing algorithm 122 to generate a next sequential modified audio segment. Audio playback application 116 completes processing of the next sequential modified audio segment before playback of the first modified segment is completed. In this way, the next sequential modified audio segment is ready for playback before playback of the first modified segment has been completed, which allows for audio playback application 116 to remove vocal components from the audio source 120 in substantially real time. In some examples, the only delay experienced by a user is the processing time for the audio playback application 116 to process the first segment extracted from audio source 120.

Audio playback application 116 also detects an audio input from one or more microphones 222 of the input module 130. The audio input represents a vocal input obtained by one or more microphones 222 within the vehicle, such as from occupants of the vehicle participating in karaoke experience. The audio playback application 116 causes the loudspeakers 230 of the output module 140 to play back the audio input in addition to the audio source 120. In some cases, audio playback application 116 modifies the audio input by applying compression, reverb, autotune, or other effects to the audio input. Audio playback application 116 plays back the audio input on an audio output device, such as one or more loudspeakers, along with the audio source 120. In some cases, audio playback application 116 plays back video content on displays within the vehicle or toggles interior or exterior lighting in addition to playing back the audio source 120 and audio input to enhance the karaoke experience.

Audio playback application 116 also detects a number and/or location of occupants within the vehicle based on inputs received from input module 130. For example, audio playback application 116 detects a seating location within the vehicle based on sensor data from one or more microphones 222, occupant-facing sensors 226 or compartment sensors 228. For example, audio playback application 116 determines that there is more than one occupant of the vehicle and selects a vocal removing algorithm 122 that removes primary and secondary vocals from the audio source 120. As another example, audio playback application 116 determines that there is only one occupant within the vehicle and selects a vocal removing algorithm 122 that only removes primary vocals from the audio source 120. Additionally, audio playback application 116 can apply lighting effects using interior or exterior vehicle lighting that are customized depending upon the number of detected occupants or a detected seating location of occupants of the vehicle. These lighting effects or other customization can be defined by a user profile that is stored in data store 118.

The input module 130 includes multiple types of sensors, one or more microphones 222, occupant-facing sensors 226, and compartment sensors 228. In some cases, input module 130 also includes, without limitation, vehicle sensors, such as outward-facing cameras, external microphones, accelerometers, etc. Occupant-facing sensors 226 include cameras or motion sensors that are oriented to detect the presence of occupants within the vehicle. In some cases, occupant-facing sensors 226 can also detect users based on facial recognition so that audio playback application 116 can identify a user profile that specifies karaoke experience preferences, such as selection of a particular vocal removing algorithm 122. Compartment sensors 228 include other types of sensors, such as pressure sensors, temperature sensors, or other types of sensors that also detect the presence of occupants within the vehicle. In various embodiments, the input module 130 provides a combination of sensor data to audio playback application 116, which can utilize inputs obtained by one or more microphones 222 as well as sensor data from occupant-facing sensors 226 and compartment sensors 228 to determine a number of occupants or a seating location of occupants within the vehicle. Additionally, input module 130 provides audio inputs from one or more microphones 222 that can be played back using loudspeakers 230 within the vehicle when a karaoke mode is selected by a user within the vehicle.

The output module 140 includes multiple types of output devices, including, without limitation, loudspeakers 230, displays 232 and HMI 234. The output module 140 performs one or more actions in response to an output signal from computing device 110 or other subsystems within the vehicle. For example, the output module 140 receives an audio output from computing device 110, which can include multiple audio outputs that are mixed together by computing device 110. The output module 140 plays back the audio output using loudspeakers 230 within the vehicle. For example, audio playback application 116 mixes an audio source 120 together with an audio input detected by one or more microphones 222 and transmits an audio output including both the audio source 120 and audio input to output module 140, which plays back the audio using loudspeakers 230. As another example, output module 140 receives other information from computing device 110 and causes the displays 232 or HMI 234 to display notifications, messages, alerts, or other information.

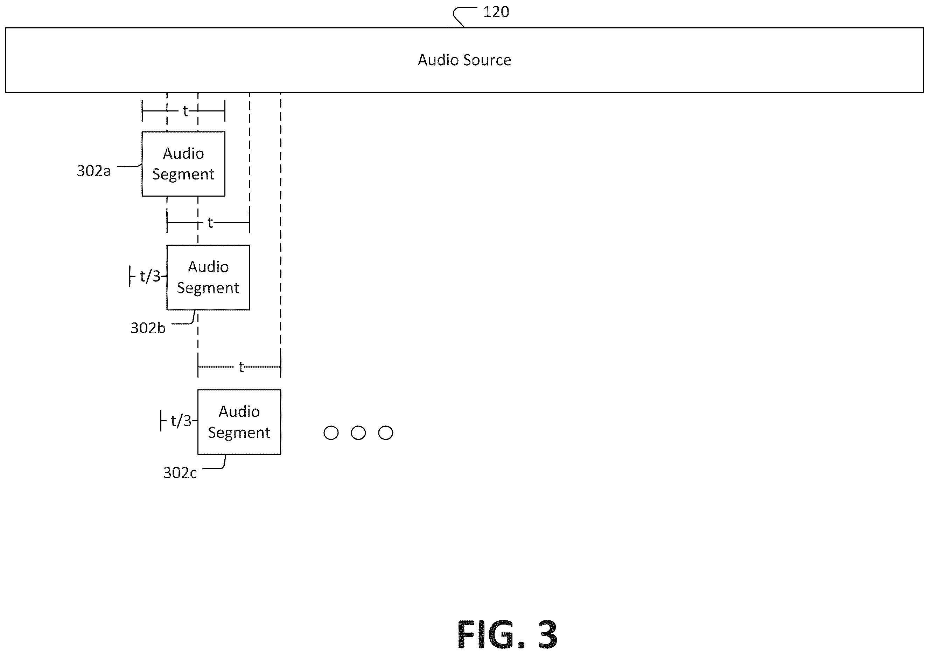

FIG. 3 illustrates an example of an audio source 120 that is processed according to one or more aspects of the present disclosure. FIG. 3 illustrates how the audio playback application 116 extracts segments from the audio source 120 and processes the respective segments to remove vocal components to generate modified segments that are played back to provide a karaoke experience.

FIG. 3 depicts an audio source 120 that is provided to the audio playback application 116. The audio source 120 represents a song obtained from the data store 118 or streamed from a streaming audio source or a terrestrial or satellite radio station. Accordingly, as the audio playback application 116 receives the audio source 120, audio playback application 116 extracts one or more audio segments 302 from the audio source 120. In the example of FIG. 3, a user activates a karaoke mode provided by audio playback application 116, which causes audio playback application 116 to extract audio segments 302 from the audio source 120 and remove vocal components from the respective audio segments 302. As shown in FIG. 3, audio playback application 116 first extracts audio segment 302a, which is sized at length *t* milliseconds, where *t* represents a time slice of audio segment 302a. Audio playback application 116 provides audio segment 302a as an input to a vocal removing algorithm 122 and receives a modified audio segment from which vocal components have been removed.

Audio playback application 116 also extracts audio segment 302b, which comes after audio segment 302a in audio source 120. As shown in FIG. 3, audio segment 302a and audio segment 302b temporally overlap one another so that audio playback application 116, once audio segment 302a and audio segment 302b are modified by vocal removing algorithm 122, can play back the modified audio segments by minimizing or eliminating perceived gaps between one or more audio segments including audio segment 302a and audio segment 302b. In the example of FIG. 3, audio playback application 116 extracts audio segments 302 from audio source 120 every *t*/*3* milliseconds, and the audio segments 302 are sized *t* milliseconds, which results in audio segment 302a and audio segment 302b temporally overlapping. Audio playback application 116 continues to extract additional audio segments 302, such as audio segment 302c, extracted *t*/*3* milliseconds after the start of audio segment 302b and which temporally overlaps one or more of audio segment 302a or audio segment 302b, and so on. Other levels of temporal overlap for adjacent segments can be utilized by examples of the disclosure. Additionally, temporal overlap between audio segments 302 extracted from audio source 120 is not required to remove vocal components from an audio source 120 according to examples of the disclosure.

In one example, audio segment 302a and audio segment 302b are identically sized. The size of an audio segment 302 is selected so that an audio segment 302 can be processed by audio playback application 116 to remove vocal components in an amount of time that is equal to or less than the amount of time required to play back the previous audio segment 302. In other words, the size of an audio segment 302 is selected so that the audio playback application 116 processes a subsequent segment before playback of a previous segment has completed. By completing processing of a segment before playback of a previous segment is completed, playback gaps are eliminated and vocal components are removed from the audio source substantially in real-time.

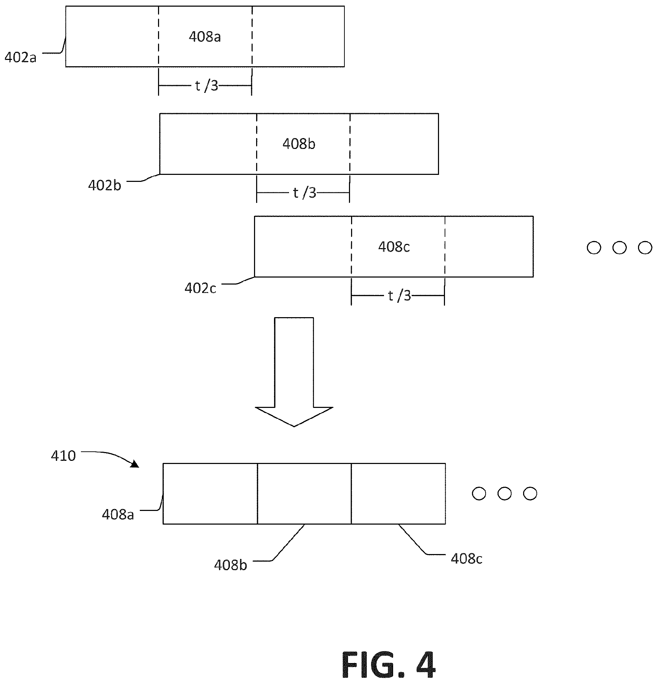

FIG. 4 illustrates an example of an audio source 120 that is processed according to one or more aspects of the present disclosure. FIG. 4 illustrates additional detail regarding how the audio playback application 116 extracts segments from the audio source 120, processes the respective segments to remove vocal components to generate modified segments, and generates a modified audio source 410 that is played back to provide a karaoke experience.

Shown in FIG. 4 are audio segments 402 that include audio segment 402a, audio segment 402b, and audio segment 402c. The audio segments 402a, 402b, and 402c represent the audio segments 302a, 302b, and 302c, that are processed by vocal removing algorithm 122 to remove vocal components. Accordingly, audio segments 402a, 402b, and 402c, are output by vocal removing algorithm 122 with the vocal components removed. As noted above in the discussion of FIG. 3, the audio segments 302 temporally overlap one another. Therefore, the audio segments 402 also temporally overlap one another. The audio segments 402 temporally overlap one another so that audio playback application 116 can play back the audio segments 302 in a manner that minimizes playback gaps that are perceived by a user.

In the example of FIG. 4, audio playback application 116 extracts subsegments from the audio segments 402. For example, audio subsegment 408a is extracted from audio segment 402a, audio subsegment 408b from audio segment 402b, and audio subsegment 408c from audio segment 402c. In one example, the size of audio subsegment 408a, audio subsegment 408b, and audio subsegment 408c is selected so that it matches the amount of temporal overlap between the audio segments 302. Playback of audio subsegment 408a is commenced as soon as processing of audio subsegment 402a by vocal removing algorithm 122 is completed to create a modified segment without vocal components. In the case of a first segment that is being played back upon activation of a karaoke mode, audio playback application 116 can cause playback of the entire audio segment 402a from the beginning of audio segment 402a because there is no prior audio segment 402 that is being played back. In some examples, audio playback application 116 can cause playback of an unmodified portion of audio source 120 prior to audio segment 402.

Once audio playback application 116 processes and outputs audio segment 402b from vocal removing algorithm 122, audio playback application 116 extracts audio subsegment 408b from audio segment 402b. Then, once audio playback application 116 detects that playback of audio subsegment 408a has been completed, audio playback application 116 initiates playback of audio subsegment 408b. Once audio playback application 116 processes and outputs audio segment 402c from vocal removing algorithm 122, audio playback application 116 extracts audio subsegment 408c from audio segment 402c. Then, once audio playback application 116 detects that playback of audio subsegment 408b has been completed, audio playback application 116 initiates playback of audio subsegment 408c. This process can continue until playback of the audio source 120 and subsequent audio sources 120 have completed or until the user disables a karaoke mode provided by audio playback application 116. By playing back audio subsegments 408a, 408b, and 408c sequentially, audio playback application 116 reduces or eliminates perceived discontinuities or playback gaps between the audio subsegments 408a, 408b, and 408c during playback.

Accordingly, modified audio source 410 is generated by sequentially playing back audio subsegment 408a, audio subsegment 408b, audio subsegment 408c, and subsequent subsegments that are generated by audio playback application 116. Modified audio source 410 represents the audio source 120 from which vocal components have been removed by audio playback application 116. In some implementations, a playback delay is introduced that is equivalent to the processing time of the first audio segment processed by audio playback application 116. It should be appreciated that audio playback application 116 can process a given audio source 120 without extracting subsegments of audio from the audio segments 302 and can instead provide the audio segments 302 directly to the vocal removing algorithm 122 to remove vocal content and then sequentially playing back the modified audio segments that are output by the vocal removing algorithm 122.

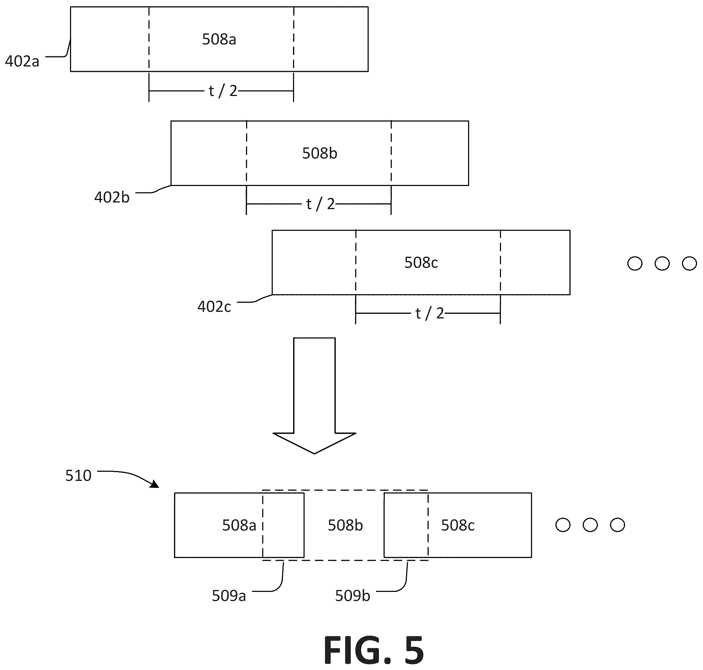

FIG. 5 illustrates another example of an audio source 120 that is processed according to one or more aspects of the present disclosure. FIG. 5 illustrates additional detail regarding how the audio playback application 116 extracts segments from the audio source 120, processes the respective segments to remove vocal components to generate modified segments, and generates a modified audio source 510 that is played back to provide a karaoke experience.

Shown in FIG. 5 are audio segments 402 that include audio segment 402a, audio segment 402b, and audio segment 402c, similar to the example of FIGS. 3-4. The audio segments 402a, 402b, and 402c represent the audio segments 302a, 302b, and 302c, that are processed by vocal removing algorithm 122 to remove vocal components. Accordingly, audio segments 402a, 402b, and 402c, are output by vocal removing algorithm 122 with vocal components removed. As noted above in the discussion of FIGS. 3-4, the audio segments 302 temporally overlap one another. Therefore, the audio segments 402 also temporally overlap one another. The audio segments 402 temporally overlap one another so that audio playback application 116 can play back the audio segments 302 in a manner that minimizes playback gaps that are perceived by a user.

In the example of FIG. 5, audio playback application 116 extracts subsegments 508 from the audio segments 402. The subsegments 508 extracted from the audio segments 402 in the example of FIG. 5 are larger in size than the example of FIG. 4 to illustrate the concept that various sizing for audio segments and subsegments can be utilized. Additionally, various additional playback techniques can also be utilized, such as crossfading the modified segments output by the vocal removing algorithm 122. Audio subsegment 508a is extracted from audio segment 402a, audio subsegment 508b from audio segment 402b, and audio subsegment 508c from audio segment 402c. In this example, the size of audio subsegment 508a, audio subsegment 508c, and audio subsegment 508c is selected so that it is larger than the amount of temporal overlap between the audio segments 302 so that modified audio source 510 is generated by crossfading playback of audio subsegment 508a, audio subsegment 508b, and audio subsegment 508c with one another. Playback of audio subsegment 508a commences as soon as processing of audio subsegment 402a by vocal removing algorithm 122 is completed to create a modified segment without vocal components. In the case of a first segment that is being played back upon activation of a karaoke mode, audio playback application 116 can cause playback of the entire audio segment 402a from the beginning of audio segment 402a because there is no prior audio segment 402 that is being played back. In some examples, audio playback application 116 can cause playback of an unmodified portion of audio source 120 prior to audio segment 402.

Once audio playback application 116 processes and outputs audio segment 402b from vocal removing algorithm 122, audio playback application 116 extracts audio subsegment 508b from audio segment 402b. Then, once audio playback application 116 detects that playback of audio subsegment 508a results in content that is also contained within audio subsegment 508b, audio playback application 116 initiates playback of audio subsegment 508b but crossfades playback with audio subsegment 508a as indicated by crossfade zone 509a so that perceptibility of playback gaps is further reduced or eliminated. Audio playback application 116 determines that playback of audio subsegment 508a contains content that is also within audio subsegment 508b based on respective beginning and ending timestamps associated with audio subsegment 508a and audio subsegment 508b. Accordingly, once playback of audio subsegment 508a is occurring at a timestamp within the audio source 120 that is also within audio subsegment 508b, audio playback application 116 begins crossfaded playback of audio subsegment 508a and audio subsegment 508b. Audio playback application 116 crossfades playback of audio subsegment 508a and audio subsegment 508b by gradually lowering the volume of audio subsegment 508a while simultaneously gradually increasing playback volume of audio subsegment 508b.

Once audio playback application 116 processes and outputs audio segment 402c from vocal removing algorithm 122, audio playback application 116 extracts audio subsegment 508c from audio segment 402c. Then, once audio playback application 116 detects that playback of audio subsegment 508b is nearing completion or results in content being played back that is also within audio subsegment 508c, audio playback application 116 initiates playback of audio subsegment 508c but crossfades playback with audio subsegment 508b as indicated by crossfade zone 509b so that perceptibility of playback gaps is reduced or eliminated.

Accordingly, modified audio source 510 is generated by playing back audio subsegment 508a, audio subsegment 508b, audio subsegment 508c, and subsequent subsegments that are processed by vocal removing algorithm 122 utilized by audio playback application 116. Modified audio source 510 results in represents the audio source 120 from which vocal components have been removed by audio playback application 116. In some implementations, a playback delay is introduced that is equivalent to the processing time of the first audio segment processed by audio playback application 116.

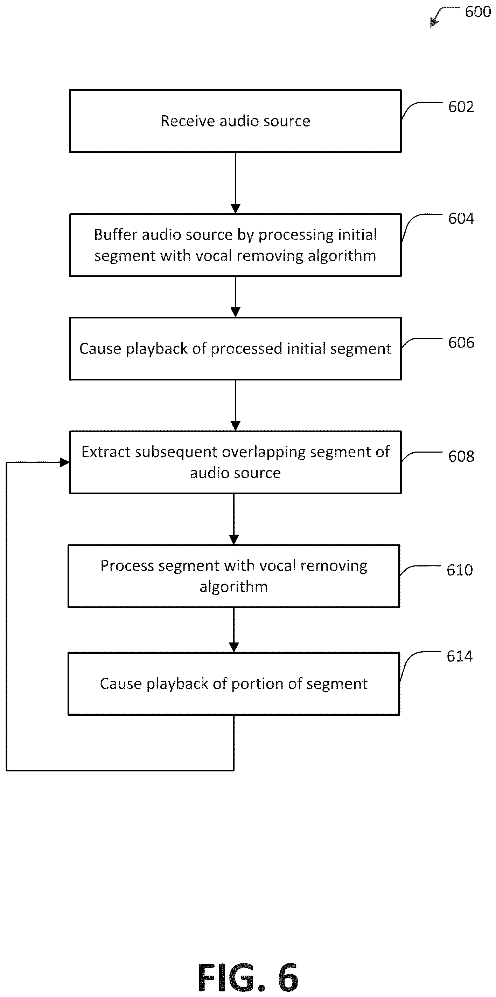

FIG. 6 is a flow diagram of method steps for processing an audio source 120 according to one or more aspects of the present disclosure. Although the method steps are described with respect to the systems of Figures 1-5, persons skilled in the art will understand that any system configured to perform the method steps, in any order, falls within the scope of the various embodiments.

As shown, the method 600 begins at step 602, where the audio playback application 116 receives an audio source 120 for playback. The audio source 120 is selected by a user or selected automatically or randomly by the audio playback application 116. In some implementations, the user selects a karaoke mode provided by audio playback application 116 of the IVI system 200 and selects a song via a user interface provided by the IVI system 200.

At step 604, audio playback application 116 buffers playback of the audio source 120 by extracting an initial audio segment 302, or a first segment, of the audio source 120 and providing the first segment to a vocal removing algorithm 122. Vocal removing algorithm 122 removes primary and/or secondary vocals from the initial segment to generate an initial audio segment 402 without vocal components. The vocal removing algorithm 122 is selected depending upon a user selection, user preference, or based on the number of occupants in the vehicle. For example, if audio playback application 116 detects a single occupant in the single, audio playback application 116 selects a vocal removing algorithm 122 that removes only primary vocal but allows secondary vocals to remain. If audio playback application 116 detects more than one occupant in the vehicle, audio playback application 116 selects a vocal removing algorithm 122 that removes primary and secondary vocals. Playback does not commence until the initial segment is processed by the vocal removing algorithm 122. At step 606, audio playback application causes playback of the initial audio segment 402.

At step 608, audio playback application 116 extracts a subsequent audio segment 302 from the audio source 120. The subsequent audio segment 302 temporally overlaps with the initial audio segment 302. In other words, the subsequent audio segment 302 contains a portion of the end of the initial audio segment 302 of the audio source 120 as well as a portion of the audio source 120 following the initial audio segment 302 that is not in the initial audio segment 302. It should be noted that the subsequent audio segment 302 need not temporally overlap the initial audio segment 302 in all implementations.

At step 610, audio playback application 116 processes the subsequent audio segment 302 with the vocal removing algorithm 122 to remove vocal components and produce a subsequent audio segment 402 with vocal components removed. As noted above, the size of the subsequent audio segment 302 can be selected using various techniques. For example, the subsequent audio segment 302 is the same size as the initial audio segment 302. As another example, the audio playback application 116 calculates how much time is required to process audio segments 302 using the vocal removing algorithm 122 and selects a size of the subsequent audio segment 302 so that generating a subsequent audio segment 402 is completed at the same time or before generating the initial audio segment 402 without vocal components is completed.

At optional step 612, audio playback application 116 crossfades playback of the subsequent segment with the initial segment. Audio playback application 116 crossfades the portion of the subsequent audio segment 402 that temporally overlaps with the initial audio segment 402 to reduce or eliminate user perception of gaps between the segments. In some embodiments, audio playback application 116 does not crossfade playback of the subsequent audio segment 402 with the initial audio segment 402 but instead plays back the subsequent audio segment 402 when playback of the initial audio segment 402 has completed.

At step 614, audio playback application 116 causes playback of at least a portion of the subsequent audio segment 402. In some examples, audio playback application 116 initiates playback of the subsequent audio segment 402 after playback of the initial audio segment 402 has completed. The method 600 then returns to step 608, where the audio playback application 116 extracts a next subsequent audio segment 302 from the audio source 120 that follows the subsequent audio segment 302. Accordingly, the subsequent audio segment 302 then becomes the initial audio segment 302 as described in steps 608, 610, and 612 of the method 600, and the next subsequent audio segment 302 becomes the subsequent audio segment 302 as described in steps 608, 610, 612, and 614 of the method 600. The method 600 continues until playback of audio source 120 has been completed or is interrupted by a user or another event.

In sum, an audio playback system causes playback of an audio source, such as a song from a local or remote source, along with an audio input, such as a vocal input from a user. The audio source is processed in segments by the audio playback system. The audio playback system provides segments of the audio source to a vocal removing algorithm to remove a vocal component from the segments. An initial segment of the audio source is processed by the vocal remover algorithm and played back using an audio output device associated with the IVI system. The initial segment provides a buffer of audio from which vocal components have been removed. Subsequent segments are provided to the vocal removing algorithm. Subsequent segments are processed by the vocal removing algorithm and played back until all segments are processed and played back. In some embodiments, the segments corresponding to the audio source are overlapping in time. The overlapping segments are processed by the vocal removing algorithm to produce segments with vocal components removed. In some cases, subsegments of the overlapping segments are played back by the audio playback system. In other scenarios, playback of overlapping subsegments is crossfaded to further reduce or eliminate playback discontinuities between subsegments. For example, the audio playback system crossfades the overlapping subsegments so that, to the listener, the audio source is perceived as being played back as a continuous audio stream.

At least one technical advantage of the disclosed techniques relative to the prior art is that, with the disclosed techniques, the vocal components of a song for which a user desires a karaoke experience are removed by vocal remover algorithms substantially in real-time. By removing the vocal components of the song substantially in real time, a karaoke experience is provided with any number of audio sources that are streamed for playback. Additionally, utilizing a microphone to capture vocal inputs within the vehicle allows for playback of the vocal inputs along with the song. Accordingly, playing back the audio source without vocal components along with the vocal inputs captured by the one or more microphones provides an improved karaoke experience. These technical advantages provide one or more technological advancements over prior art approaches.
1. In some embodiments, a computer-implemented method comprises receiving an audio source for playback, extracting a first segment of the audio source, the first segment comprising a first portion of the audio source, removing a first vocal component from the first segment to create a first modified segment, and causing playback of at least a subsegment of the first modified segment using one or more audio output devices.
2. The computer-implemented method of clause 1, wherein removing the first vocal component from the first segment comprises executing a vocal removing algorithm on the first segment to produce the first modified segment.
3. The computer-implemented method of clauses 1 or 2, further comprising detecting a number of users, wherein the vocal removing algorithm is selected based on the number of users.
4. The computer-implemented method of any of clauses 1-3, wherein the number of users comprises a number of occupants of a vehicle.
5. The computer-implemented method of any of clauses 1-4, further comprising extracting a second segment of the audio source, the second segment comprising a second portion of the audio source that is subsequent to the first portion, removing a second vocal component from the second segment to create a second modified segment, and causing playback of at least a subsegment of the second modified segment subsequent to the first modified segment using one or more audio output devices.
6. The computer-implemented method of any of clauses 1-5, wherein the first segment and second segment temporally overlap.
7. The computer-implemented method of any of clauses 1-6, wherein causing playback of the subsegment of the second modified segment subsequent to the subsegment of the first modified segment comprises cross-fading playback the subsegment of the first segment with the playback of the subsegment of the second segment subsequent to the first segment.
8. The computer-implemented method of any of clauses 1-7, wherein causing playback of the second modified segment subsequent to the first modified segment comprises causing playback of at least a subsegment of the second modified segment upon completion of playback of at least the subsegment of the first modified segment.
9. The computer-implemented method of any of clauses 1-8, further comprising selecting a size of the first segment based upon a processing time required to remove the first vocal component from the first segment.
10. The computer-implemented method of any of clauses 1-9, wherein a size of the second segment is different from a size of the first segment.
11. The computer-implemented method of any of clauses 1-10, wherein a processing time required to remove a second vocal component from a second segment that is subsequent to the first segment is less than a playback time of the first segment.
12. In some embodiments, one or more non-transitory computer-readable media store instructions that, when executed by one or more processors, cause the one or more processors to perform the steps of receiving an audio source for playback, extracting a first segment of the audio source, the first segment comprising a first portion of the audio source, removing a first vocal component from the first segment to create a first modified segment, and causing playback of at least a subsegment of the first modified segment using one or more audio output devices.
13. The one or more non-transitory computer-readable media of clause 12, wherein removing the first vocal component from the first segment comprises executing a vocal removing algorithm on the first segment to produce the first modified segment.
14. The one or more non-transitory computer-readable media of clauses 12 or 13, wherein the steps further comprise extracting a second segment of the audio source, the second segment comprising a second portion of the audio source that is subsequent to the first portion, removing a second vocal component from the second segment to create a second modified segment, and causing playback of the second modified segment subsequent to the first modified segment using one or more audio output devices.
15. The one or more non-transitory computer-readable media of any of clauses 12-14, wherein the first segment and second segment temporally overlap.
16. The one or more non-transitory computer-readable media of any of clauses 12-15, wherein causing playback of the subsegment of the second modified segment subsequent to the subsegment of the first modified segment comprises cross-fading playback the subsegment of the first segment with the playback of the subsegment of the second segment subsequent to the first segment.
17. The one or more non-transitory computer-readable media of any of clauses 12-16, wherein causing playback of the second modified segment subsequent to the first modified segment comprises causing playback of at least a subsegment of the second modified segment upon completion of playback of at least the subsegment of the first modified segment.
18. The one or more non-transitory computer-readable media of any of clauses 12-17, further comprising selecting a size of the first segment based upon a processing time required to remove the first vocal component from the first segment.
19. The one or more non-transitory computer-readable media of any of clauses 12-18, wherein playback of the first segment is delayed based on the processing time.
20. In some embodiments, a system comprises one or more audio output devices, a memory storing an audio playback application, and a processor coupled to the memory that executes the audio playback application by performing the steps of receiving an audio source for playback, extracting a first segment of the audio source, the first segment comprising a first portion of the audio source, removing a first vocal component from the first segment to create a first modified segment, and causing playback of at least a subsegment of the first modified segment using one or more audio output devices.

Any and all combinations of any of the claim elements recited in any of the claims and/or any elements described in this application, in any fashion, fall within the contemplated scope of the present invention and protection.

The descriptions of the various embodiments have been presented for purposes of illustration but are not intended to be exhaustive or limited to the embodiments disclosed. Many modifications and variations will be apparent to those of ordinary skill in the art without departing from the scope and spirit of the described embodiments.

Aspects of the present embodiments can be embodied as a system, method or computer program product. Accordingly, aspects of the present disclosure can take the form of an entirely hardware embodiment, an entirely software embodiment (including firmware, resident software, micro-code, etc.) or an embodiment combining software and hardware aspects that can all generally be referred to herein as a "module," a "system," or a "computer." In addition, any hardware and/or software technique, process, function, component, engine, module, or system described in the present disclosure can be implemented as a circuit or set of circuits. Furthermore, aspects of the present disclosure can take the form of a computer program product embodied in one or more computer readable medium(s) having computer readable program code embodied thereon.

Any combination of one or more computer readable medium(s) can be utilized. The computer readable medium can be a computer readable signal medium or a computer readable storage medium. A computer readable storage medium can be, for example, but not limited to, an electronic, magnetic, optical, electromagnetic, infrared, or semiconductor system, apparatus, or device, or any suitable combination of the foregoing. More specific examples (a non-exhaustive list) of the computer readable storage medium would include the following: an electrical connection having one or more wires, a portable computer diskette, a hard disk, a random access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing. In the context of this document, a computer readable storage medium can be any tangible medium that can contain or store a program for use by or in connection with an instruction execution system, apparatus, or device.

Aspects of the present disclosure are described above with reference to flowchart illustrations and/or block diagrams of methods, apparatus (systems) and computer program products according to embodiments of the disclosure. It will be understood that each block of the flowchart illustrations and/or block diagrams, and combinations of blocks in the flowchart illustrations and/or block diagrams, can be implemented by computer program instructions. These computer program instructions can be provided to a processor of a general-purpose computer, special purpose computer, or other programmable data processing apparatus to produce a machine. The instructions, when executed via the processor of the computer or other programmable data processing apparatus, enable the implementation of the functions/acts specified in the flowchart and/or block diagram block or blocks. Such processors can be, without limitation, general purpose processors, special-purpose processors, application-specific processors, or field-programmable gate arrays.

The flowchart and block diagrams in the figures illustrate the architecture, functionality, and operation of possible implementations of systems, methods and computer program products according to various embodiments of the present disclosure. In this regard, each block in the flowchart or block diagrams can represent a module, segment, or portion of code, which comprises one or more executable instructions for implementing the specified logical function(s). It should also be noted that, in some alternative implementations, the functions noted in the block can occur out of the order noted in the figures. For example, two blocks shown in succession may, in fact, be executed substantially concurrently, or the blocks can sometimes be executed in the reverse order, depending upon the functionality involved. It will also be noted that each block of the block diagrams and/or flowchart illustration, and combinations of blocks in the block diagrams and/or flowchart illustration, can be implemented by special purpose hardware-based systems that perform the specified functions or acts, or combinations of special purpose hardware and computer instructions.

While the preceding is directed to embodiments of the present disclosure, other and further embodiments of the disclosure can be devised without departing from the basic scope thereof, and the scope thereof is determined by the claims that follow.

## Claims

1. A computer-implemented method comprising:
receiving an audio source for playback;
extracting a first segment of the audio source, the first segment comprising a first portion of the audio source;
removing a first vocal component from the first segment to create a first modified segment; and
causing playback of at least a subsegment of the first modified segment using one or more audio output devices.

2. The computer-implemented method of claim 1, wherein removing the first vocal component from the first segment comprises executing a vocal removing algorithm on the first segment to produce the first modified segment.

3. The computer-implemented method of claim 1 or 2, further comprising detecting a number of users, wherein the vocal removing algorithm is selected based on the number of users.

4. The computer-implemented method of any of claims 1 to 3, wherein the number of users comprises a number of occupants of a vehicle.

5. The computer-implemented method of any of claims 1 to 4, further comprising:
extracting a second segment of the audio source, the second segment comprising a second portion of the audio source that is subsequent to the first portion;
removing a second vocal component from the second segment to create a second modified segment; and
causing playback of at least a subsegment of the second modified segment subsequent to the first modified segment using one or more audio output devices.

6. The computer-implemented method of any of claims 1 to 5, wherein the first segment and second segment temporally overlap.

7. The computer-implemented method of any of claims 1 to 6, wherein causing playback of the subsegment of the second modified segment subsequent to the subsegment of the first modified segment comprises cross-fading playback the subsegment of the first segment with the playback of the subsegment of the second segment subsequent to the first segment.

8. The computer-implemented method of any of claims 1 to 7, wherein causing playback of the second modified segment subsequent to the first modified segment comprises causing playback of at least a subsegment of the second modified segment upon completion of playback of at least the subsegment of the first modified segment.

9. The computer-implemented method of any of claims 1 to 8, further comprising selecting a size of the first segment based upon a processing time required to remove the first vocal component from the first segment.

10. The computer-implemented method of any of claims 1 to 9, wherein a size of the second segment is different from a size of the first segment.

11. The computer-implemented method of any of claims 1 to 10, wherein a processing time required to remove a second vocal component from a second segment that is subsequent to the first segment is less than a playback time of the first segment.

12. One or more non-transitory computer-readable media storing instructions that, when executed by one or more processors, cause the one or more processors to perform the steps of:
receiving an audio source for playback;
extracting a first segment of the audio source, the first segment comprising a first portion of the audio source;
removing a first vocal component from the first segment to create a first modified segment; and
causing playback of at least a subsegment of the first modified segment using one or more audio output devices.

13. The one or more non-transitory computer-readable media of claim 12, further comprising selecting a size of the first segment based upon a processing time required to remove the first vocal component from the first segment.

14. The one or more non-transitory computer-readable media of claim 12 or 13, wherein playback of the first segment is delayed based on the processing time.

15. A system comprising:
one or more audio output devices;
a memory storing an audio playback application; and
a processor coupled to the memory that executes the audio playback application by performing the steps of the method of any of claims 1 to 11.
